# EUROPEAN PATENT SPECIFICATION

(11) **EP 2 075 176 B1**
(45) Date of publication and mention of the grant of the patent: **26.10.2011**
(21) Application number: 08254125.1
(22) Date of filing: 23.12.2008
(51) Int. Cl.: B62H 1/04, B62J 27/00, B62K 11/04, F01N 3/28, F01N 13/02

(54) **Straddle type vehicle**
Grätschsitz-Fahrzeug
Véhicule du type monté à califourchon

(30) Priority: 28.12.2007 JP 2007341417; 14.03.2008 JP 2008066233; 25.11.2008 JP 2008300072
(43) Date of publication of application: 01.07.2009
(73) Proprietor: Yamaha Hatsudoki Kabushiki Kaisha, Iwata-shi, Shizuoka 438-8501 (JP)
(72) Inventor: Mizutani, Masami, Shizuoka-ken 438-8501 (JP); Iizuka, Toshio, Shizuoka-ken 438-8501 (JP)
(74) Representative: Lamb, Martin John Carstairs

(56) References cited:
- JP-A- 9 053 441
- JP-A- 10 035 562
- JP-A- 2000 033 895
- JP-A- 2008 267 173
- US-A1- 2006 242 952

## Description

### FIELD OF THE INVENTION

The present invention relates to a straddle type vehicle including an air cleaner coupled to an engine and a catalyst provided in an intermediate portion of an exhaust pipe coupled to the engine for purifying exhaust gas discharged from the engine.

### BACKGROUND TO THE INVENTION

In straddle type vehicles such as motorcycles, a configuration is known in which an air cleaner is disposed above an engine. For example, a construction is known that an air cleaner is disposed above a crankcase provided in a lower part of the engine and in the rear of a cylinder block. Such an arrangement is disclosed in, for example, JP-A-58-152115.

A catalyst for purifying exhaust gas is provided in an exhaust pipe in a straddle type vehicle having an engine as a power source. For example, a configuration is known that a catalyst is disposed in the exhaust pipe disposed below the engine. This arrangement is also disclosed in JP-A-58-152115.

However, the conventional straddle type vehicle described above has the following problem. Since the air cleaner is disposed above the engine and the catalyst is disposed below the engine, the air cleaner is positioned to be influenced by heat emitted by the engine and the catalyst.

Specifically, when the temperature increases in an area around the air cleaner due to heat emitted by the engine and the catalyst, efficiency of air induction into the engine lowers, and thus the engine output lowers.

JP2000033895 describes a straddle type vehicle comprising an engine, a vehicle body frame supporting the engine, a swing arm pivotally mounted on the vehicle body frame and extending rearward to support a rear wheel, a rear fender, a shock absorber positioned between the swing arm and the vehicle body frame, an air cleaner connected to the engine and being positioned rearward of the shock absorber and in front of a rearmost portion of the rear fender, wherein at least a part of the air cleaner is provided above the swing arm.

US2006/0242952 describes an expansion chamber connected to a downstream side of an exhaust pipe and located under a rear suspension and behind an engine. The expansion chamber contains a catalytic converter.

The present invention has been made in view of such a problem, and therefore has an object to provide a straddle type vehicle that further reduces influence of heat emitted by an engine and a catalyst on an air cleaner.

### SUMMARY OF THE INVENTION

Various aspects of the present invention are defined in the independent claim 1. Some preferred features are defined in the dependent claims.

Described herein is a straddle type vehicle according to claim 1.

The vehicle body frame may include a vertical frame part extending in a vertical direction rearward of the engine. The vertical frame part may include an upper part which supports the shock absorber, an intermediate part which supports the swing arm, and a lower part which supports the expansion chamber. At least a part of the air cleaner may be provided rearward of the vertical frame part.

The swing arm may have a right arm portion and a left arm portion. At least a part of the shock absorber may be positioned between the right and left arm portions.

A part of the air cleaner may be provided below an upper part of the shock absorber. A part of the air cleaner may be positioned below an upper end of the rear wheel.

At least a part of the expansion chamber may be provided between the vehicle body frame and the rear wheel below the swing arm.

The air cleaner may be disposed rearward of an upper end of the shock absorber. The air cleaner may adjoin, for example abut or be adjacent to or the like, an upper end of the shock absorber. A recess may be formed at a front end of the air cleaner. The recess may be curved along an outer peripheral shape of the shock absorber.

The straddle type vehicle may further comprise an intake duct extending from the air cleaner toward the engine. The intake duct may be disposed on either side of the recess.

The shock absorber may have a cylindrical damper for reducing shock to the rear wheel by reciprocal motion. The shock absorber may have a spring, such as a coil spring. The spring may be disposed within or around the damper.

The shock absorber may be disposed such that a longitudinal length direction thereof is oriented along a vertical direction of the vehicle.

A lower end of the shock absorber may be directly coupled to the swing arm. That is, no link mechanism may be interposed between the lower end of the shock absorber and the swing arm.

The straddle type vehicle may comprise a first stand which is adapted to be reconfigured between a retracted position and a deployed position. Typically, the first stand is retracted when the vehicle is traveling, and is located in a deployed position when the vehicle is at standstill.

The first stand may comprise a pair of support legs for supporting the vehicle in a standstill state. A coupling part may extend between the pair of the support legs.

The expansion chamber may be disposed rearward of the engine. A rear end of the expansion chamber may be disposed in front of the rear wheel. A coupling part of the first stand may be positioned between the rear end of the expansion chamber and the rear wheel when the first stand is configured in the retracted position.

The first stand may be constructed such that a whole thereof is positioned above a lowest part of the expansion chamber in the traveling state.

The first stand may be constructed such that both ends of the first stand in the vehicle width direction may be positioned outside in the vehicle width direction of both ends of the expansion chamber in the vehicle width direction. A lowest part of the first stand may be positioned above a lowest part of the expansion chamber in the traveling state.

A vicinity of a central part of the coupling part in the vehicle width direction may protrude downward in the traveling direction.

The straddle type vehicle may comprise a restraint member adapted to contact the ground when the vehicle is leaned to make a rider conscious of a maximum leaning angle of the vehicle. Vicinities of both ends of a coupling part of the first stand in the vehicle width direction may incline inward at an inclination angle equal to or less than the maximum leaning angle of the vehicle with respect to the vertical direction.

A coupling part of the first stand may overlap with the rear wheel in a plan view when the first stand is located in a retracted configuration.

The first stand may have a rotational center above a lowest part of the expansion chamber.

The straddle type vehicle may comprise an exhaust outlet provided in the rear of the expansion chamber and between the swing arm and the first stand when configured in the retracted configuration.

The straddle type vehicle may further comprise a second stand adapted to be reconfigured between a retracted position and a deployed position and which includes a support leg provided on a side of the vehicle for supporting the vehicle in a leaned state.

A lowest part of the second stand may be positioned above a lowest part of the first stand when both the first and second stands are in a retracted position.

The straddle type vehicle may further comprise an exhaust outlet provided in a rear part of the expansion chamber. An outermost part of the exhaust outlet in the vehicle width direction may be positioned inside of an outermost part of the first stand in the vehicle width direction.

Described herein is a straddle type vehicle which includes: an engine; a vehicle body frame supporting the engine; a swing arm having a front part provided in the rear of the engine and swingably supported by the vehicle body frame and a rear part supporting a rear wheel; a shock absorber having a lower part supported by the swing arm and an upper part supported by the vehicle body frame and provided in front of the lower part; an air cleaner provided in the rear of the shock absorber and connected to the engine; and an expansion chamber provided below the shock absorber and including a catalyst for purifying exhaust gas discharged from the engine. In the straddle type vehicle, at least a part of the air cleaner is provided above the swing arm, and at least a part of the expansion chamber is provided below the swing arm.

In such a straddle type vehicle, the catalyst which emits heat is disposed in the expansion chamber. Therefore, it is difficult for heat emitted by the catalyst to be transmitted to the outside of the expansion chamber. At least a part of the air cleaner is disposed above the swing arm, and at least a part of the expansion chamber is disposed below the swing arm. Accordingly, the air cleaner and the expansion chamber can be sufficiently separated from each other. Further, the air cleaner is provided in the rear of the shock absorber, and thus the air cleaner can be disposed in a position sufficiently remote from the engine.

That is, such a straddle type vehicle can further reduce influence of heat emitted by the engine and the catalyst on the air cleaner.

The aspects of the present invention can provide a straddle type vehicle that reduces influence of heat emitted by the engine and the catalyst on the air cleaner.

### BRIEF DESCRIPTION OF THE DRAWINGS

These and other aspects of the present invention will now be described, by way of example only, with reference to the accompanying drawings, in which:
FIG. 1 is a left side view of a motorcycle in accordance with a first embodiment of the present invention;
FIG. 2 is a right side view of the motorcycle in accordance with the first embodiment of the present invention with a vehicle body cover and so forth removed;
FIG. 3 is a partially enlarged perspective view showing constructions of a swing arm, a shock absorber, and an air cleaner of the motorcycle in accordance with the first embodiment of the present invention;
FIG. 4 is a perspective view of an exhaust system of the motorcycle in accordance with the first embodiment of the present invention;
FIG. 5 is a perspective view showing an inner construction of an exhaust chamber of the motorcycle in accordance with the first embodiment of the present invention;
FIG. 6 is a side view showing a general construction of a motorcycle in accordance with a second embodiment of the present invention;
FIG. 7 is a view as seen from a direction of arrow P in FIG. 8;
FIG. 8 is a side view of a vicinity of a main stand in a traveling state of the motorcycle in accordance with the second embodiment shown in FIG. 6 as seen from one side;
FIG. 9 is a side view of a vicinity of the main stand in the traveling state of the motorcycle in accordance with the second embodiment shown in FIG. 6 as seen from the other side;
FIG. 10 is a plan view of a vicinity of an exhaust chamber and the main stand in the traveling state of the motorcycle in accordance with the second embodiment shown in FIG. 6;
FIG. 11 is a side view of a vicinity of the main stand in a standstill state of the motorcycle in accordance with the second embodiment shown in FIG. 6 as seen from one side; and
FIG. 12 is a left side view of a rear part of the motorcycle in accordance with the second embodiment of the present invention with a vehicle body cover and so forth removed.

### DETAILED DESCRIPTION OF THE DRAWINGS

### First Embodiment

A first exemplary embodiment in accordance with the present invention will be described hereinafter with reference to drawings. Specifically, descriptions will be made about the general construction of a straddle type vehicle, the constructions of a suspension unit and an air cleaner, the construction of an exhaust system, and the function and effect of such features.

The same or similar reference numerals and symbols are given to the same or similar parts in the descriptions of drawings. It should be noted, however, that the drawings are schematic illustrations and dimensional ratios in each drawing may be different from the reality.

Accordingly, the following descriptions should be referred to in determining specific dimensions and so forth. In addition, dimensional relationships and ratios may be different between the drawings.

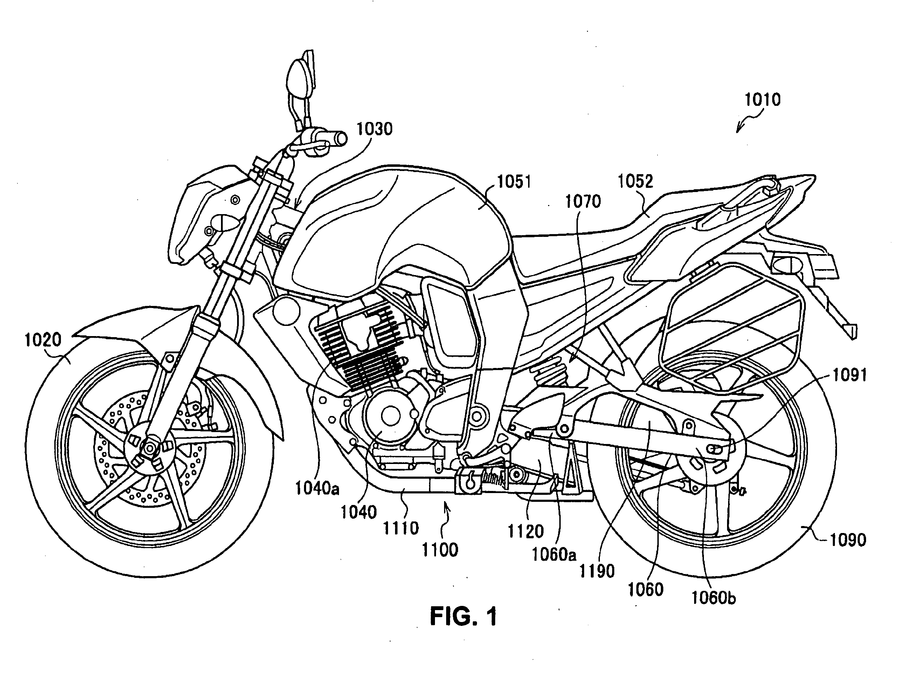

FIG.1 is a left side view of a motorcycle 1010 constructing a straddle type vehicle according to the first embodiment.

As shown in FIG. 1, the motorcycle 1010 includes a front wheel 1020 and a rear wheel 1090. The motorcycle 1010 drives the rear wheel 1090 by driving force generated by an engine 1040.

The engine 1040 is a single-cylinder four-cycle engine. The engine 1040 is air-cooled and has a small displacement. The engine 1040 is mounted on a vehicle body frame 1030 forming a framework of the motorcycle 1010.

A fuel tank 1051 for storing fuel is disposed above the engine 1040. A seat 1052 on which a rider is to be seated is disposed in the rear of the fuel tank 1051.

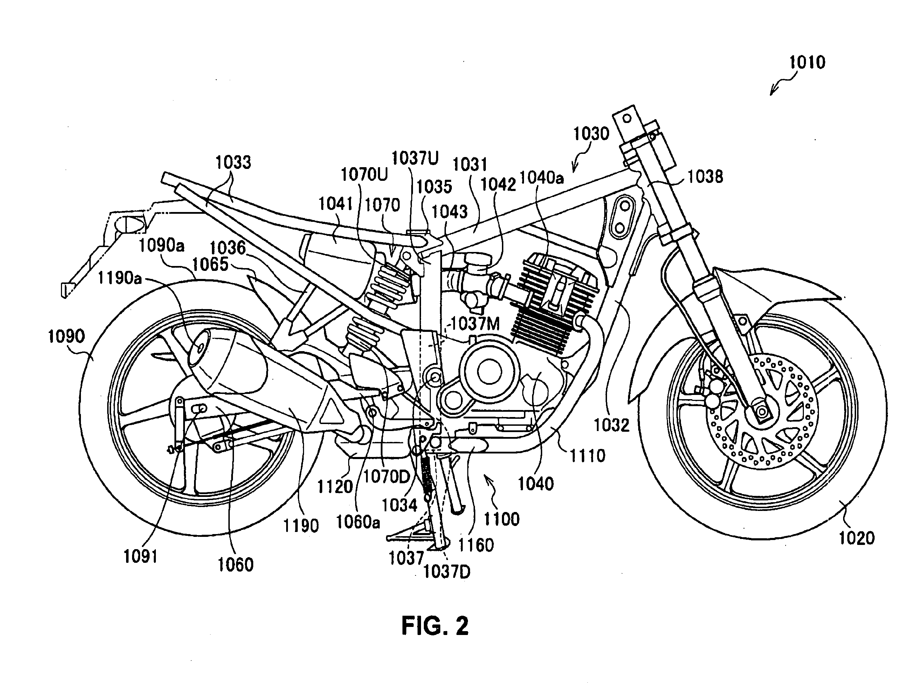

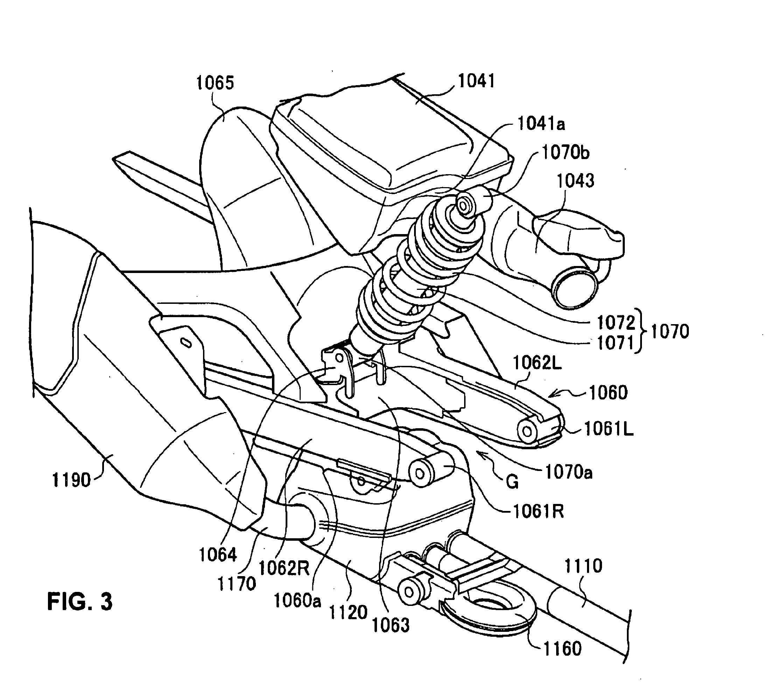

The rear wheel 1090 is supported swingably in the generally vertical direction by a swing arm 1060 provided in the rear of the engine 1040. The swing arm 1060 has a pair of arms 1062L and 1062R (not shown in FIG. 1, see FIG. 3) for rotatably supporting an axle 1091 of the rear wheel 1090. The vehicle body frame 1030 has a pivot part 1034 (FIG. 2) for swingably supporting the swing arm 1060.

A shock absorber 1070 for absorbing shocks to the rear wheel 1090 is coupled to a front part 1060a of the swing arm 1060. A rear part 1060b of the swing arm 1060 rotatably supports the rear wheel 1090.

The shock absorber 1070 extends upward from the front part 1060a of the swing arm 1060. In the first embodiment, the swing arm 1060 and the shock absorber 1070 construct a suspension unit on which the rear wheel 1090 is suspended.

Specifically, the shock absorber 1070 has a lower part 1070D supported by the front part 1060a of the swing arm 1060 and an upper part 1070U supported by the vehicle body frame 1030 and provided in front of the lower part 1070D.

An exhaust system 1100 is coupled to the engine 1040. In other words, an exhaust pipe 1110 is coupled to a cylinder head 1040a of the engine 1040.

FIG. 2 is a right side view of the motorcycle 1010 with a vehicle body cover (not shown) and so forth removed.

As shown in FIG. 2, the vehicle body frame 1030 has a main frame 1031, a down tube 1032, seat rails 1033, and a center frame 1037. The main frame 1031 extends rearward from a head pipe 1038. The down tube 1032 extends downwardly obliquely rearward from the head pipe 1038.

The seat rails 1033 are coupled to the main frame 1031 via a bracket 1035. Stays 1036 for supporting a silencer 1190 are coupled to the seat rails 1033.

The center frame 1037 extends along the vertical direction of the motorcycle 1010 rearward of the engine 1040, specifically, in a central part of the motorcycle 1010. The center frame 1037 has an upper part 1037U for supporting the shock absorber 1070, an intermediate part 1037M for supporting the swing arm 1060, and a lower part 1037D for supporting an exhaust chamber 1120. The shock absorber 1070 is supported by the upper part 1037U via the bracket 1035.

The pivot part 1034 is provided in the intermediate part 1037M of the center frame 1037. In other words, the center frame 1037 pivotally supports the swing arm 1060. A single center frame 1037 or a plurality of center frames 1037 may be provided. For example, the center frame 1037 may be composed of one or a plurality of components.

In the first embodiment, the center frame 1037 and a part of the bracket 1035 construct a vertical frame part.

An upper end 1070b (not shown in FIG. 2, see FIG. 3) of the shock absorber 1070 is directly coupled to the bracket 1035. A lower end 1070a (not shown in FIG. 2, see FIG. 3) of the shock absorber 1070 is directly coupled to the swing arm 1060.

An air cleaner 1041 for purifying air to be supplied to the engine 1040 is disposed between the right and left seat rails 1033. The air cleaner 1041 is provided rearward of the shock absorber 1070. The air cleaner 1041 is provided above the swing arm 1060. The air cleaner 1041 is provided rearward of the center frame 1037.

Specifically, the air cleaner 1041 is disposed to adjoin the upper end 1070b of the shock absorber 1070 in the rear of the upper end 1070b (or the upper part 1070U). At least a part of the air cleaner 1041 is provided below the upper part 1070U of the shock absorber 1070 and below an upper end 1090a of the rear wheel 1090.

The air cleaner 1041 is coupled to the cylinder head 1040a via an intake duct 1043. A carburetor 1042 for injecting fuel is mounted on the intake duct 1043. Air from the air cleaner 1041 is mixed with fuel by the carburetor 1042, and thereafter inducted into the engine 1040.

The exhaust system 1100 includes the exhaust pipe 1110, the exhaust chamber 1120 and the silencer 1190. The exhaust chamber 1120 is provided below the shock absorber 1070 and communicatively connected to the exhaust pipe 1110. The silencer 1190 is communicatively connected to the exhaust chamber 1120 via a connecting pipe 1170 (not shown in FIG. 1 or 2, see FIG. 3). In other words, the exhaust chamber 1120 is provided between the engine 1040 and the silencer 1190.

The exhaust chamber 1120 is disposed below the suspension unit constructed with the swing arm 1060 and the shock absorber 1070. Specifically, the exhaust chamber 1120 is provided between the vehicle body frame 1030 and the rear wheel 1090 below the swing arm 1060. The exhaust system 1100 has a reflux pipe 1160 communicatively connected to a lower part of the exhaust chamber 1120. The reflux pipe 1160 refluxes exhaust gas to the exhaust chamber 1120. The reflux pipe 1160 extends from the exhaust chamber 1120 to a part below a rear part of the engine 1040.

Exhaust gas discharged from the engine 1040 via the exhaust pipe 1110 expands in the exhaust chamber 1120. In the first embodiment, the exhaust chamber 1120 constructs an expansion chamber.

The silencer 1190 is positioned at a rear end of the exhaust system 1100. Specifically, the silencer 1190 is disposed on the right side of the rear wheel 1090. Exhaust gas is discharged from a rear end 1190a of the silencer 1190.

The exhaust chamber 1120 and the silencer 1190 reduce exhaust noise generated by the engine 1040. In the first embodiment, since the exhaust chamber 1120 is provided, the silencer 1190 is made smaller in size than in the case that the exhaust chamber 1120 is not provided. In other words, the overall length of the exhaust system 1100 is shorter compared to the case that the exhaust chamber 1120 is not provided.

Constructions of the swing arm 1060 and the shock absorber 1070 and a construction of the air cleaner 1041 will now be described. FIG. 3 is a partially enlarged perspective view showing the constructions of the swing arm 1060, the shock absorber 1070, and the air cleaner 1041.

As shown in FIG. 3, the swing arm 1060 has supported parts 1061L and 1061R, the arms 1062L and 1062R, a bridge 1063, and a rear fender 1065. The rear fender 1065 covers a part of the rear wheel 1090. The arm 1062L constructs a left arm portion. The arm 1062R constructs a right arm portion.

The supported parts 1061L and 1061R are supported by the vehicle body frame 1030. The arms 1062L and 1062R are integral with the supported parts 1061L and 1061R and rotatably support the axle 1091, of the rear wheel 1090.

The bridge 1063 couples the arms 1062L and 1062R together. A gap G is formed between the supported parts 1061L and 1061R and the bridge 1063.

A bracket 1064 is mounted on the bridge 1063. The lower end 1070a of the shock absorber 1070 is coupled to the bracket 1064.

The exhaust chamber 1120 is disposed in the rear of the supported parts 1061L and 1061R and below a part at which the shock absorber 1070 and the swing arm 1060 are coupled together. Specifically, the exhaust chamber 1120 is disposed below the gap G and the bridge 1063.

The shock absorber 1070 has a damper 1071 and a coil spring 1072. The damper 1071 absorbs shocks to the rear wheel 1090 by reciprocal motion. The damper 1071 is formed in the shape of a cylinder. The damper 1071 is disposed such that its longitudinal direction is along the vertical direction of the motorcycle 1010. The coil spring 1072 is disposed around an outer periphery of the damper 1071.

A recess 1041a curved along an outer peripheral shape of the shock absorber 1070 is formed at a front end of the air cleaner 1041. The intake duct 1043 is disposed on the left side of the recess 1041a. The air cleaner 1041 is formed thinner toward the rear to correspond to an interval between the upper and lower seat rails 1033.

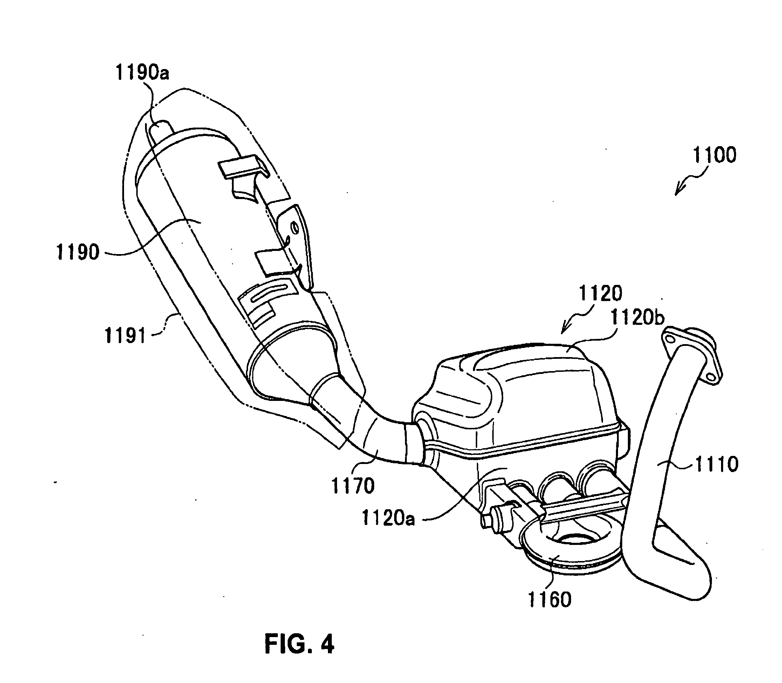

A construction of the exhaust system 1100 will now be described. FIG. 4 is a perspective view of the exhaust system 1100.

As shown in FIG. 4, the exhaust chamber 1120 is communicatively connected to the exhaust pipe 1110. The reflux pipe 1160 is communicatively connected to a front end 1120a of the exhaust chamber 1120. A protrusion 1120b protruding upward is formed on the exhaust chamber 1120. The protrusion 1120b is positioned below the gap G.

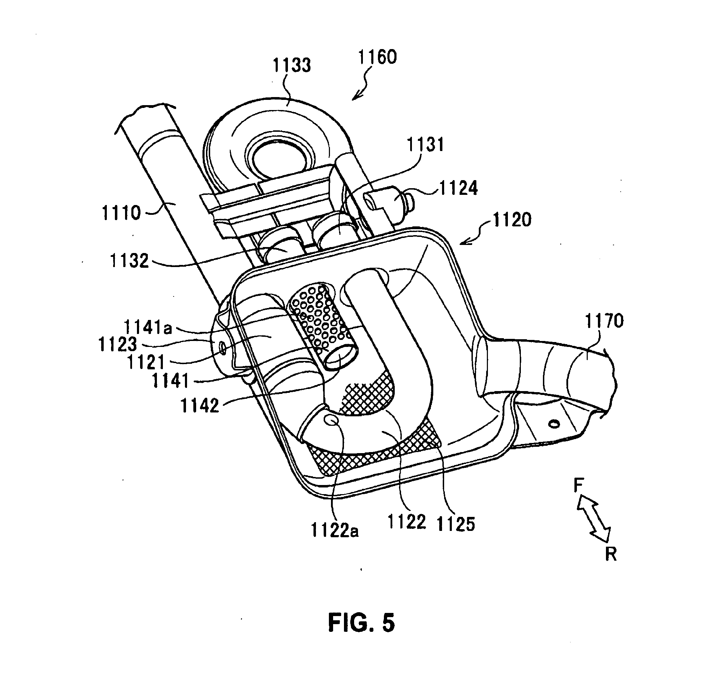

A mounting part 1123 is provided on the exhaust chamber 1120. A mounting part 1124 is provided on the reflux pipe 1160 (see FIG. 5). The exhaust chamber 1120 is mounted on the vehicle body frame 1030 using the mounting parts 1123 and 1124.

A connecting pipe section 1170 is communicatively connected to the exhaust chamber 1120. The silencer 1190 is communicatively connected to the connecting pipe section 1170. A protector 1191 is provided on the outside of the silencer 1190.

FIG. 5 is a perspective view of the exhaust chamber 1120 and the reflux pipe 1160 which construct the expansion chamber in the first embodiment. FIG. 5 illustrates an inner construction of the exhaust chamber 1120.

As shown in FIG. 5, a catalyst 1121 for purifying exhaust gas discharged from the engine 1040 is disposed in the exhaust chamber 1120 which is box-shaped. The catalyst 1121 is coupled to the exhaust pipe 1110. Exhaust gas having passed through the exhaust pipe 1110 is guided into the catalyst 1121.

A communication section 1122 is communicatively connected to the catalyst 1121. The communication section 1122 is communicatively connected to the reflux pipe 1160, specifically, to a first pipe section 1131.

An opening 1122a is formed in the communication section 1122. Specifically, the opening 1122a is formed in the immediate rear of the catalyst 1121. In the first embodiment, the opening 1122a is formed in an upper surface of the communication section 1122. An opening (not shown) similar to the opening 1122a is formed in a lower surface of the communication section 1122 facing the opening 1122a. In other words, two openings are formed in the communication section 1122. A mesh part 1125 is provided on an inner bottom surface of the exhaust chamber 1120.

The reflux pipe 1160 has the first pipe section 1131, a second pipe section 1132, and a folded pipe section 1133. The first pipe section 1131 extends from the exhaust chamber 1120 to the front of the motorcycle 1010 (direction F in the figure).

The second pipe section 1132 is communicatively connected to the first pipe section 1131 via the folded pipe section 1133 and to the exhaust chamber 1120. The second pipe section 1132 is communicatively connected to the exhaust chamber 1120 from the front side of the motorcycle 1010. In the first embodiment, the exhaust pipe 1110 is disposed generally in parallel with the first pipe section 1131 and the second pipe section 1132. In other words, the exhaust pipe 1110 is also communicatively connected to the exhaust chamber 1120 from the front side of the motorcycle 1010.

The folded pipe section 1133 couples the first pipe section 1131 and the second pipe section 1132 together. In other words, exhaust gas having passed through the first pipe section 1131 is guided to the second pipe section 1132 via the folded pipe section 1133.

The second pipe section 1132 has a protrusion 1141 protruding in the second pipe section 1132. Exhaust gas discharged from the communication section 1122 to the reflux pipe 1160 is discharged from the protrusion 1141 into the exhaust chamber 1120. In other words, exhaust gas discharged from the protrusion 1141 expands in the exhaust chamber 1120.

Exhaust holes 1141a are formed in an outer periphery of the protrusion 1141. Each exhaust hole 1141a is circular and a large number of them are formed in the outer periphery of the protrusion 1141. Exhaust gas is discharged to the exhaust chamber 1120 via the exhaust holes 1141a.

In the first embodiment, an end of the protrusion 1141 is sealed. Specifically, a cap 1142 is mounted on the end of the protrusion 1141.

In the straddle type vehicle (motorcycle 1010) in accordance with the first embodiment, the catalyst 1121 which emits heat is disposed in the exhaust chamber 1120. Therefore, it is difficult for heat emitted by the catalyst 1121 to be transmitted to the outside of the expansion chamber 1120. The air cleaner 1041 is disposed rearward of the shock absorber 1070 and above the swing arm 1060. In addition, the exhaust chamber 1120 is disposed below the shock absorber 1070 and below the swing arm 1060. Accordingly, the air cleaner 1041 and the exhaust chamber 1120 can be sufficiently separated from each other. Further, the swing arm 1060 and the shock absorber 1070 are disposed in the rear of the engine 1040. The air cleaner 1041 is disposed in the rear of the center frame 1037 positioned in the rear of the engine 1040. In other words, the air cleaner 1041 is disposed in a position sufficiently remote from the engine 1040.

That is, such a motorcycle 1010 can further reduce influence of heat emitted by the engine 1040 and the catalyst 1121 on the air cleaner 1041.

In the first embodiment, the air cleaner 1041 is disposed rearward of the upper end 1070b of the shock absorber 1070. The air cleaner 1041 adjoins the upper end 1070b of the shock absorber 1070. In other words, the air cleaner 1041 is disposed in a position sufficiently remote from the catalyst 1121 and the engine 1040. This allows further reduction in influence of heat emitted by the engine 1040 and the catalyst 1121 on the air cleaner 1041.

In the first embodiment, the exhaust chamber 1120 is disposed below the swing arm 1060. Accordingly, the exhaust chamber 1120 can be remotely positioned from the air cleaner 1041. This allows further reduction in influence of heat emitted by the catalyst 1121 in the exhaust chamber 1120 on the air cleaner 1041.

In the first embodiment, the recess 1041a curved along the outer peripheral shape of the shock absorber 1070 is formed at the front end of the air cleaner 1041. Therefore, a sufficient capacity of the air cleaner 1041 can be secured and at the same time the air cleaner 1041 can be disposed to adjoin the shock absorber 1070. Accordingly, reduction in influence of heat emitted by the engine 1040 and the catalyst 1121 on the air cleaner 1041 can be made compatible with prevention of a size increase of the motorcycle 1010.

In the first embodiment, the intake duct 1043 extending from the air cleaner 1041 toward the engine 1040 is disposed on the left side of the recess 1041a. Therefore, interference between the intake duct 1043 and the shock absorber 1070 can be prevented and at the same time the air cleaner 1041 can be disposed to adjoin the shock absorber 1070.

In the first embodiment, the lower end 1070a of the shock absorber 1070 is directly coupled to the swing arm 1060 with no link mechanism interposed therebetween. Therefore, the shock absorber 1070 does not protrude below the swing arm 1060 when the swing arm 1060 swings. Accordingly, the exhaust chamber 1120 disposed below the swing arm 1060 can be disposed close to the swing arm 1060 without interference between the exhaust chamber 1120 and the swing arm 1060.

Further, in the first embodiment, the reflux pipe 1160 is provided outside of the exhaust chamber 1120. This facilitates securing an exhaust passage of a required length. This further increases the substantial capacity of the exhaust chamber 1120 compared to the case that an exhaust pipe in a length equivalent to the reflux pipe 1160 is disposed in the exhaust chamber 1120. This accordingly improves reduction in exhaust noise.

In this embodiment, the swing arm 1060 has the pair of arms 1062L and 1062R and the bridge 1063 coupling the pair of arms 1062L and 1062R together. The lower end 1070a of the shock absorber or cushion unit 1070 is coupled to the bridge 1063. Thereby, the heavy cushion unit 1070 can be disposed in the central position of the vehicle, and traveling stability of the motorcycle 1010 can be enhanced. This allows absorption of shocks to the rear wheel 1090 by the single cushion unit 1070.

### Second Embodiment

A second exemplary embodiment of the straddle type vehicle in accordance with the present invention will be described hereinafter with reference to drawings.

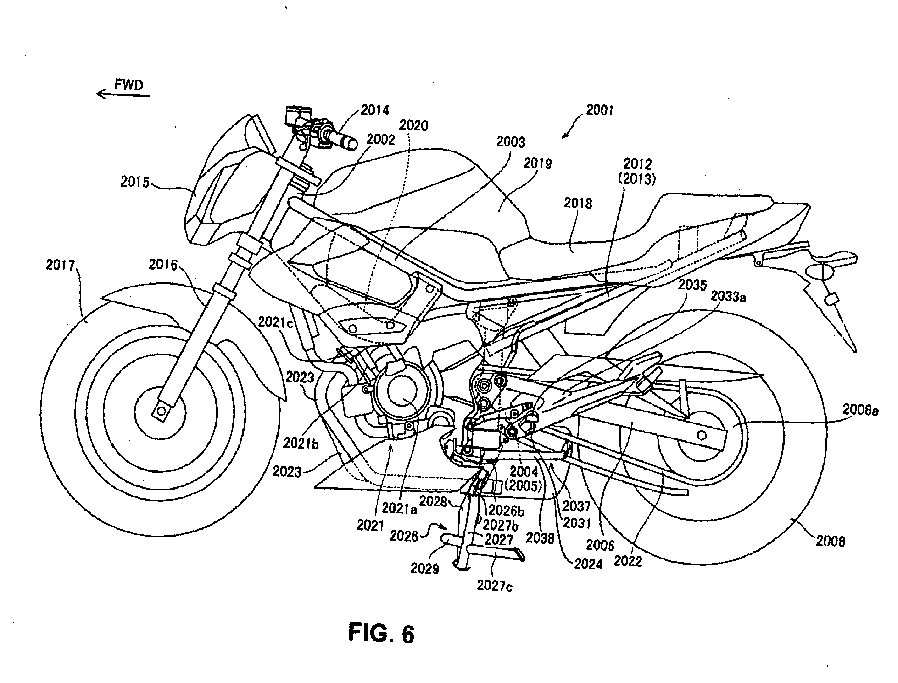

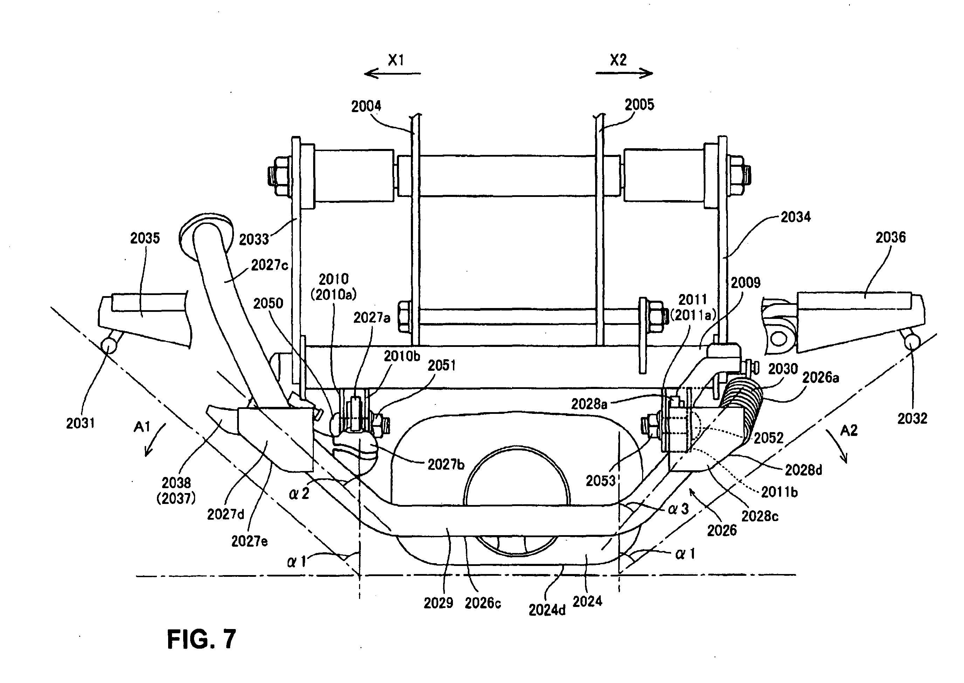

FIG. 6 is a side view showing a general construction of a motorcycle in accordance with the second embodiment of the present invention. FIGs. 7 through 12 are drawings to illustrate details of constructions of an exhaust chamber and a vicinity of a main stand of the motorcycle in accordance with the second embodiment shown in FIG. 6. In the second embodiment, descriptions will be made about a motorcycle as an exemplary vehicle of the present invention. In the figures, direction FWD indicates the forward traveling direction of the motorcycle. A construction of a motorcycle 2001 in accordance with the second embodiment of the present invention will be described hereinafter in detail with reference to FIGs. 6 through 12.

In the motorcycle 2001 in accordance with the second embodiment of the present invention, as shown in FIG. 6, a main frame 2003 extending in the fore-and-aft direction is disposed in the rear of a head pipe 2002. As shown in FIGs. 6 and 7, a pair of pivot supporting plates 2004 and 2005 extending downward are provided in a vicinity of a central part of the main frame 2003 (see FIG. 6) in the fore-and-aft direction.

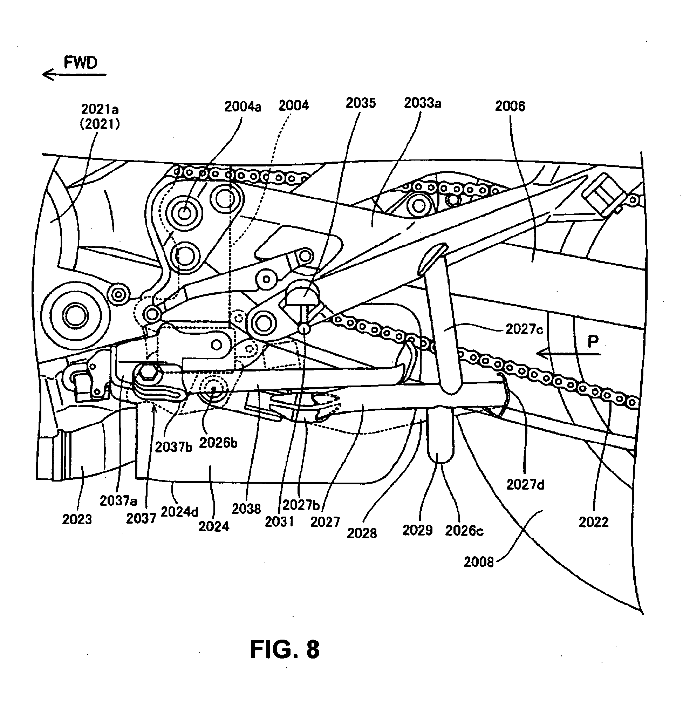

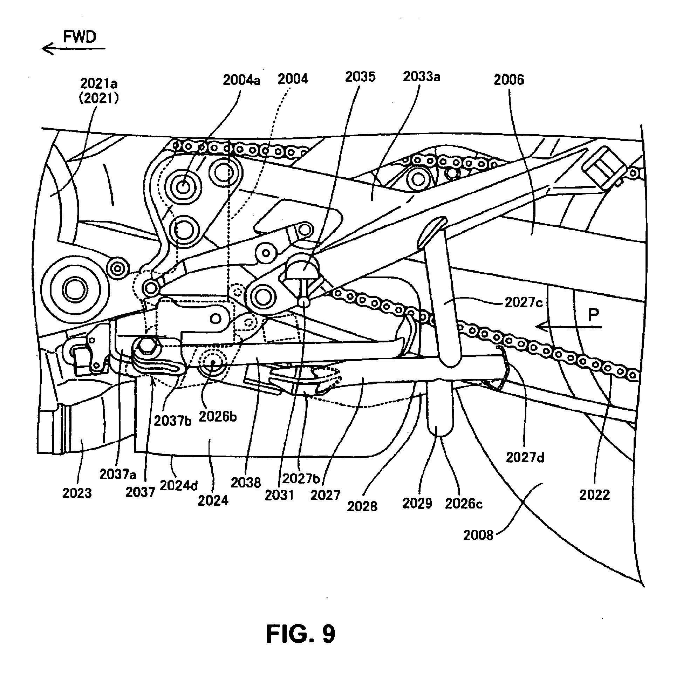

As shown in FIG. 8, a pivot part 2004a for supporting a swing arm 2006 swingably around a vicinity of a front end of the swing arm 2006 is provided on the pivot supporting plate 2004. As shown in FIG. 9, a pivot part 2005a for supporting a swing arm 2007 swingably around a vicinity of a front end of the swing arm 2007 is provided on the pivot supporting plate 2005. A rear wheel 2008 is rotatably mounted on a vicinity of a rear end of each of the swing arms 2006 (see FIG. 8) and 2007 (see FIG. 9). As shown in FIG. 7, a connecting member 2009 extending in the vehicle width direction (directions of arrows X1 and X2) is mounted on a lower end of each of the pair of pivot supporting plates 2004 and 2005. Each of a pair of mounting members 2010 and 2011 is mounted on a lower surface of the connecting member 2009 to protrude downward. Each of the mounting members 2010 and 2011 is provided for rotatably mounting a main stand 2026 described later.

As shown in FIG. 6, a back stay 2012 is mounted between a rear part of the main frame 2003 and the pivot supporting plate 2004. A back stay 2013 is mounted between the rear part of the main frame 2003 and the pivot supporting plate 2005. A vehicle body frame is constructed with the head pipe 2002, the main frame 2003, the pivot supporting plates 2004 and 2005, the connecting member 2009, and the back stays 2012 and 2013.

Handlebars 2014 are rotatably mounted on an upper part of the head pipe 2002. A headlight 2015 is provided in front of the head pipe 2002. A pair of front forks 2016 having suspensions for absorbing shocks in the vertical direction are disposed below the head pipe 2002. A front wheel 2017 is rotatably mounted on lower ends of the pair of the front forks 2016.

A seat 2018 is disposed in an upper part in the rear of the main frame 2003. A fuel tank 2019 is disposed in front of the seat 2018.

An engine retaining member 2020 is mounted below the main frame 2003. An engine 2021 is suspended on the engine retaining member 2020. The engine 2021 is a parallel four-cylinder engine in which four cylinders (not shown) are arranged in the vehicle width direction. Specifically, the engine 2021 includes a crankcase 2021a in which a crankshaft (not shown) is disposed to extend in the vehicle width direction, a cylinder block 2021b extending upwardly forward from an upper part of the crankcase 2021a in which the four cylinders (not shown) are arranged in the vehicle width direction, and a cylinder head 2021c disposed in an upper part of the cylinder block 2021b.

A drive chain 2022 for transmitting driving force generated in the engine 2021 to the rear wheel 2008 is guided out from a rear part of the crankcase 2021a. The drive chain 2022 is guided out to extend rearward and meshed with a driven sprocket 2008a provided in the rear wheel 2008.

One end of each of four exhaust pipes 2023 for guiding out exhaust gas is mounted on a front side of the cylinder head 2021c. Each of the exhaust pipes 2023 extends downward from the front side of the cylinder head 2021c, thereafter curves rearward, and extends to a lower part in the rear of the engine 2021.

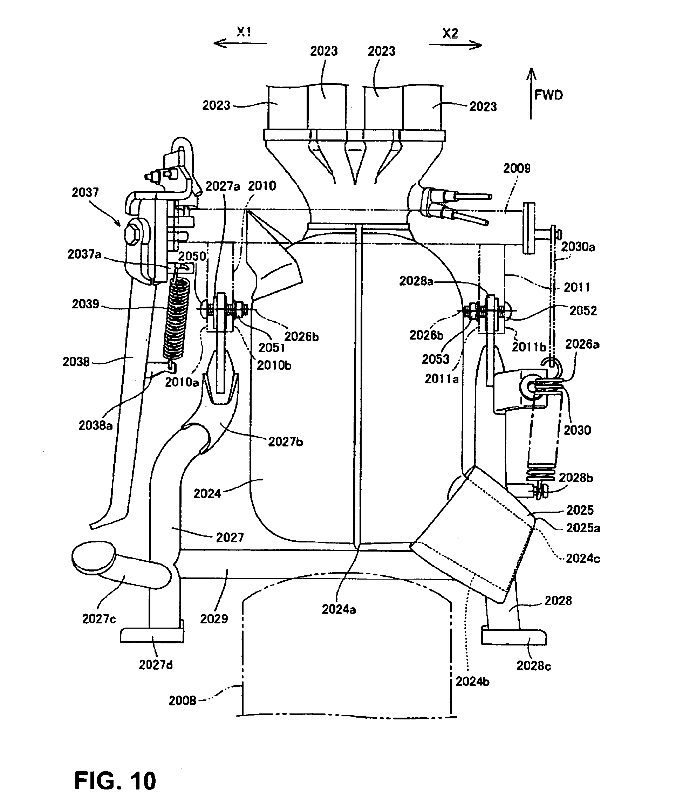

In the second embodiment, as shown in FIGs. 8 and 10, the other end of each of the four exhaust pipes 2023 is connected to a single exhaust chamber 2024. As shown in FIG. 6, the exhaust chamber 2024 is disposed between the engine 2021 and the rear wheel 2008, and has a function to purify exhaust gas discharged from the engine 2021 and to reduce exhaust noise. The exhaust chamber 2024 constructs an expansion chamber in the second embodiment.

The exhaust chamber 2024 is disposed such that its rear end 2024a (see FIG. 10) is positioned in front of the rear wheel 2008 and a prescribed interval is interposed between the rear end 2024a and a front part of the rear wheel 2008. The interval between the front part of the rear wheel 2008 and the rear end 2024a (see FIG. 10) of the exhaust chamber 2024 is configured such that an upper part of the interval is wider than a lower part of the interval.

In the second embodiment, as shown in FIG. 10, an exhaust outlet 2024b for discharging exhaust gas is mounted on a rear part of the exhaust chamber 2024a in the direction of arrow X2. The exhaust outlet 2024b is provided to extend rearward in the direction of arrow X2. As shown in FIG. 9, the exhaust outlet 2024b is disposed between the main stand 2026 in a traveling state that will be described later and the swing arm 2007, and thus is constructed such that exhaust gas discharged from the exhaust outlet 2024b does not directly hit the rear wheel 2008. A cover member 2025 is provided to cover an outer periphery of the exhaust outlet 2024b. As shown in FIG. 10, an end of the exhaust outlet 2024b is housed in the cover member 2025 not to project out from the cover member 2025 in a plan view.

An end (outermost part) 2024c of the exhaust outlet 2024b in the direction of arrow X2 is positioned more in the direction of arrow X1 (inside) than an outermost part 2026a in the direction of arrow X2 of the main stand 2026 described later. Further, similarly to the exhaust outlet 2024b, an end 2025a of the cover member 2025 in the direction of arrow X2 is positioned more in the direction of arrow X1 (inside) than the outermost part 2026a in the direction of arrow X2 of the main stand 2026 described later.

In the second embodiment, the main stand 2026 is provided that has a rotational center 2026b on both sides of the exhaust chamber 2024 in the vehicle width direction (directions of arrows X1 and X2). The main stand 2026 is an example of "first stand" of the present invention. The main stand 2026 is constructed to be capable of tuning upward. The vehicle can travel with a pair of support legs 2027 and 2028 turned up rearward (the state of FIG. 8). As shown in FIG. 8, the rotational center 2026b of the main stand 2026 is provided above a lowest part 2024d of a lower surface of the exhaust chamber 2024. The main stand 2026 is constructed such that a lowest part 2026c of the main stand 2026 is positioned above the lowest part 2024d of the exhaust chamber 2024 in the traveling state (the state of FIG. 8). In other words, the main stand 2026 is constructed such that a whole of the main stand 2026 is positioned above the lowest part 2024d of the exhaust chamber 2024 in the traveling state.

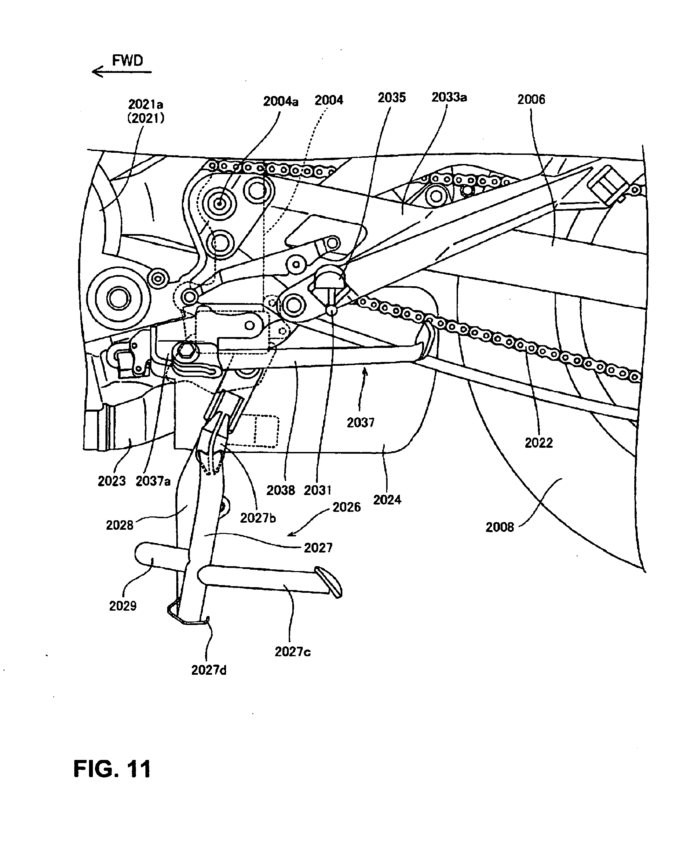

In the second embodiment, as shown in FIGs. 10 and 11, the main stand 2026 includes the pair of support legs 2027 and 2028 described above for supporting the vehicle in a standstill state (the state of FIG. 11) and a cross pipe 2029 for coupling the pair of support legs 2027 and 2028 together. The cross pipe 2029 is an example of "coupling part" of the present invention. As shown in FIG. 10, the support leg 2027 is positioned on a side of the exhaust chamber 2024 in the direction of arrow X1, and the support leg 2028 is positioned on a side of the exhaust chamber 2024 in the direction of arrow X2. In other words, the main stand 2026 is constructed such that both ends thereof in the vehicle width direction (directions of arrows X1 and X2) are positioned outside in the vehicle width direction of both ends of the exhaust chamber 2024 in the vehicle width direction in the traveling state (the state of FIGs. 8 and 10).

One end of the support leg 2027 is rotatably mounted on the mounting member 2010. Specifically, as shown in FIGs. 7 and 10, a bearing member 2027a is mounted on the one end of the support leg 2027. The support leg 2027 is fixed by a screw member 2050 and a nut 2051 with the bearing member 2027a inserted between a plate 2010a for one side and a plate 2010b for the other side of the mounting member 2010. As shown in FIG. 10, the support leg 2027 is formed into a curved shape in which the other end (the end contacting with the ground) protrudes outward (direction of arrow X1). A reinforcing member 2027b is mounted on the curved part of the support leg 2027 since a load of the vehicle concentrates at the part in the standstill state. An end of the cross pipe 2029 in the direction of arrow X1 is welded to a vicinity of the other end (the end contacting with the ground) of the support leg 2027. A side protruding member 2027c that the rider pushes with his/her foot to easily turn the main stand 2026 to the standstill state is welded to a vicinity of the part of the support leg 2027 to which the cross pipe 2029 is welded.

A ground contacting plate 2027d which can contact with the ground with a surface is mounted on the other end (the end contacting with the ground) of the support leg 2027. As shown in FIG. 7, an end 2027e of the ground contacting plate 2027d is formed to incline inside at an angle equal to or less than bank angle α1 described later in the traveling state.

As shown in FIG. 10, one end of the support leg 2028 is rotatably mounted on the mounting member 2011. Specifically, as shown in FIGs. 7 and 10, a bearing member 2028a is mounted on the one end of the support leg 2028. The support leg 2028 is fixed by a screw member 2052 and a nut 2053 with the bearing member 2028a inserted between a plate 2011a for one side and a plate 2011b for the other side of the mounting member 2011. As shown in FIG. 10, a spring mounting member 2028b protruding in the direction of arrow X2 is mounted between the one end and the other end of the support leg 2028. One end of a tension coil spring 2030 is mounted on the spring mounting member 2028b. The other end of the tension coil spring 2030 is connected to an end of the connecting member 2009 in the direction of arrow X2 via a sheet metal member 2030a. A vicinity of the other end of the tension coil member 2030 is the outermost part 2026a of the main stand 2026. As described above, the outermost part 2026a of the main stand 2026 is positioned outside in the direction of arrow X2 of the end 2024c of the exhaust outlet 2024b of the exhaust chamber 2024 in the direction of arrow X2 and the end 2025a of the cover member 2025 in the direction of arrow X2. An end of the cross pipe 2029 in the direction of arrow X2 is welded in a vicinity of the other end of the support leg 2028.

A ground contacting plate 2028c which can contact with the ground with a surface is mounted on the other end (the end contacting with the ground) of the support leg 2028. As shown in FIG. 7, an end 2028d of the ground contacting plate 2028c is formed to incline inward at an angle equal to or less than bank angle α1 described later in the traveling state.

In the second embodiment, as shown in FIG. 8, the cross pipe 2029 is positioned between the exhaust chamber 2024 and the rear wheel 2008 in the traveling state. Specifically, as shown in FIG. 7, a vicinity of a central part of the cross pipe 2029 in the vehicle width direction (directions of arrows X1 and X2) protrudes downward in the traveling state. As shown in FIG. 8, the vicinity of the central part of the cross pipe 2029 in the vehicle width direction (directions of arrows X1 and X2) is positioned in the lower part of the interval between the exhaust chamber 2024 and the rear wheel 2008 in which the interval is wider than the upper part. A lower end of the cross pipe 2029 is positioned above a lower end of the exhaust chamber 2024. Therefore, decrease in the ground clearance of the motorcycle 2001 can be prevented even if the cross pipe 2029 protrudes downward as in the second embodiment.

As shown in FIG. 10, the cross pipe 2029 overlaps with the rear wheel 2008 in a plan view in the traveling state. In other words, the cross pipe 2029 is formed to avoid a part protruding forward of the rear wheel 2008 by being positioned below it.

In the second embodiment, as shown in FIG. 7, vicinities of both ends of the cross pipe 2029 in the vehicle width direction (directions of arrows X1 and X2) are formed to incline inward at inclination angles α2 and α3, respectively, that are equal to or less than the maximum leaning angle (bank angle α1) of the vehicle with respect to the vertical direction in the traveling state. Thereby, the cross pipe 2029 can avoid the part protruding forward of the rear wheel 2008 by being positioned below the part and at the same time can be formed within bank angle α1.

In the second embodiment, bank angle α1 described above is the maximum leaning angle of the vehicle in the case that the motorcycle 2001 is leaned in direction A1 or A2 in FIG. 7. Further, the motorcycle 2001 in accordance with the second embodiment has bank sensors 2031 and 2032 for making the rider conscious of bank angle α1. Specifically, as shown in FIGs. 8 and 9, brackets 2033a and 2034a are mounted on a pair of plate members 2033 and 2034 (see FIG. 7). Steps 2035 and 2036 on which the rider can place his/her feet are mounted on the brackets 2033a and 2034a, respectively. The steps 2035 and 2036 are provided to protrude in the directions of arrows X1 and X2, respectively. The bank sensors 2031 and 2032 are mounted on lower parts of the steps 2035 and 2036, respectively. Each of the bank sensors 2031 and 2032 is an example of "restraint member" of the present invention.

As shown in FIG. 7, the bank sensor 2031 first contacts with the ground when the motorcycle 2001 is leaned in direction A1 in FIG. 7. Accordingly, the bank sensor 2031 can make the rider conscious of bank angle α1 (maximum leaning angle) of the vehicle with respect to the vertical direction when the vehicle is leaned in direction A1. The bank sensor 2032 first contacts with the ground when the motorcycle 2001 is leaned in direction A2 in FIG. 7. Thereby, the bank sensor 2032 can make the rider conscious of bank angle α1 (maximum leaning angle) of the vehicle with respect to the vertical direction when the vehicle is leaned in direction A2.

As shown in FIG. 10, a side stand 2037 for supporting the vehicle in a leaned state is mounted on an end of the connecting member 2009 in the direction of arrow X1. The side stand 2037 is an example of "second stand" of the present invention. The side stand 2037 includes a support leg 2038 and can turn around one end of the support leg 2038. A spring mounting member 2038a is mounted on a side of the support leg 2038 in the direction of arrow X2. One end of a tension coil spring 2039 is mounted on the spring mounting member 2038a. The other end of the tension coil spring 2039 rotatably retains the support leg 2038 and is connected to a mounting member 2037a capable of mounting the side stand 2037 on the connecting member 2009.

In the second embodiment, as shown in FIG. 8, a lowest part 2037b of the side stand 2037 is positioned above the lowest part 2026c of the main stand 2026 in the traveling state. As shown in FIG. 7, the side stand 2037 is positioned above a borderline for bank angle α1 shown in FIG. 7 in the traveling state.

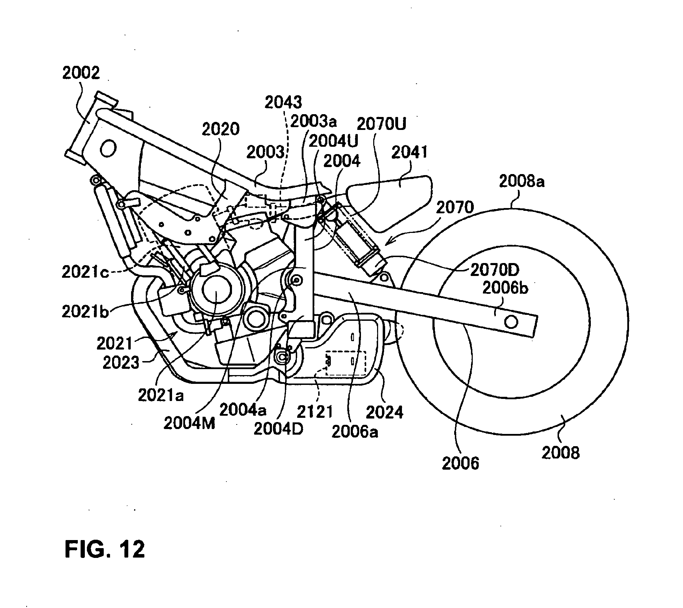

FIG. 12 is a left side view of a rear part of the motorcycle with a vehicle body cover (not shown) and so forth removed.

As shown in FIG. 12, the pivot supporting plate 2004 extends in the vertical direction in the rear of the engine 2021. The pivot supporting plate 2004 has an upper part 2004U for supporting a shock absorber 2070, an intermediate part 2004M for supporting the swing arm 2006, and a lower part 2004D for supporting the exhaust chamber 2024. The exhaust chamber 2024 includes a catalyst 2121.

The shock absorber 2070 is supported by the upper part 2004U of the pivot supporting plate 2004 via a bracket 2003a. The pivot part 2004a is provided in the intermediate part 2004M of the pivot supporting plate 2004. In other words, the pivot supporting plate 2004 pivotally supports the swing arm 2006. In the second embodiment, the pivot supporting plate 2004 and a part of the bracket 2003a construct a vertical frame part.

The swing arm 2006 has a front part 2006a swingably supported by the pivot part 2004a and a rear part 2006b supporting the rear wheel 2008.

An air cleaner 2041 is provided in the rear of the shock absorber 2070. The air cleaner 2041 is provided above the swing arm 2006. The air cleaner 2041 is provided in the rear of the pivot supporting plate 2004.

Specifically, the air cleaner 2041 is disposed to adjoin an upper part 2070U of the shock absorber 2070 in the rear of the upper part 2070U. At least a part of the air cleaner 2041 is provided below the upper part 2070U of the shock absorber 2070 and below an upper end 2008a of the rear wheel 2008. The air cleaner 2041 is coupled to the cylinder head 2021c via an air intake 2043.

The exhaust chamber 2024 is disposed below the shock absorber 2070. The exhaust chamber 2024 is provided between the pivot supporting plate 2004 and the rear wheel 2008 below the swing arm 2006.

In the second embodiment, as described above, the exhaust chamber 2024 is provided such that the rear end 2024a is disposed in front of the rear wheel 2008. The cross pipe 2029 of the main stand 2026 is positioned between the rear end 2024a of the exhaust chamber 2024 and the rear wheel 2008 in the traveling state. Thereby, the main stand 2026 having the pair of support legs 2027 and 2028 can be provided to effectively use a small gap between the rear end 2024a of the exhaust chamber 2024 and the rear wheel 2008. Accordingly, in the case that the exhaust chamber 2024 is interposed between the engine 2021 and the rear wheel 2008, a stand can be provided that supports the motorcycle 2001 at two positions on both the sides of the vehicle in the vehicle width direction.

In the second embodiment, as described above, the main stand 2026 is constructed such that the whole of the main stand 2026 is positioned above the lowest part 2024d of the exhaust chamber 2024 in the traveling state. Thereby, the main stand 2026 is not a member positioned the lowest in the motorcycle 2001 in the traveling state. Therefore, decrease in the ground clearance of the motorcycle 2001 can be prevented even if the main stand 2026 is provided.

In the second embodiment, as described above, the main stand 2026 is constructed such that both the ends of the main stand 2026 in the vehicle width direction (directions of arrows X1 and X2) are positioned outside in the vehicle width direction of both the ends of the exhaust chamber 2024 in the vehicle width direction. Thereby, the main stand 2026 can be prevented from interfering with the lower surface of the exhaust chamber 2024 in the case that the main stand 2026 is turned upward. The lowest part of the main stand 2026 is positioned above the lowest part of the exhaust chamber, thereby constructing the main stand 2026 to be positioned above the lowest part of the exhaust chamber 2024. With such effects, the main stand 2026 can be positioned above the lowest part of the exhaust chamber 2024 without forming a recess in the exhaust chamber 2024. Therefore, decrease in the volume of the exhaust chamber 2024 can be prevented, while preventing decrease in the clearance from the main stand 2026 to the ground in the traveling state.

In the second embodiment, as described above, the vicinity of the central part of the cross pipe 2029 in the vehicle width direction (directions of arrows X1 and X2) protrudes downward in the traveling state. Accordingly, the cross pipe 2029 can be disposed to avoid the part protruding the most on the front side of the rear wheel 2008.

In the second embodiment, as described above, the vicinities of both the ends of the cross pipe 2029 of the main stand 2026 in the vehicle width direction (directions of arrows X1 and X2) are formed to incline inward at inclination angles α2 and α3, respectively, that are equal to or less than the maximum leaning angle (bank angle α1) of the vehicle with respect to the vertical direction in the traveling state. Accordingly, the cross pipe 2029 of the main stand 2026 allows prevention of decrease in bank angle α1 of the vehicle.

In the second embodiment, as described above, the rotational centers 2026b of the main stand 2026 are provided above the lowest part of the exhaust chamber 2024. Thereby, the main stand 2026 can be easily disposed above the lowest part of the exhaust chamber 2024 in the case that the main stand 2026 is turned in the traveling state.

In the second embodiment, as described above, the exhaust outlet 2024b is provided in the rear of the exhaust chamber 2024 and between the main stand 2026 in the traveling state and the swing arm 2007. Accordingly, the exhaust outlet 2024b can be prevented from contacting with the rear wheel 2008 disposed in the rear of the exhaust chamber 2024. Further, burnt gases can be discharged with effective use of a space between the main stand 2026 and the swing arm 2007.

In the second embodiment, as described above, the lowest part 2037b of the side stand 2037 is positioned above the lowest part 2026c of the main stand 2026 in the traveling state. Thereby, the side stand 2037 does not become a member positioned the lowest in the motorcycle 2001 in the traveling state. Therefore, decrease in the ground clearance of the motorcycle 2001 can be prevented although the side stand 2037 is provided.

In the second embodiment, as described above, the end 2024c (the outermost part) of the exhaust outlet 2024b in the vehicle width direction (direction of arrow X2) is positioned inside (in the direction of arrow X1) of the outermost part 2026a of the main stand 2026 in the vehicle width direction (direction of arrow X2). Accordingly, the main stand 2026 can protect the exhaust outlet 2024b from physical impacts from a side (from the direction of arrow X2).

The present invention has been disclosed by way of exemplary embodiments thereof as discussed in the foregoing. However, it should be understood that the descriptions and drawings constituting a part of this disclosure do not limit the present invention. Various alternative embodiments will become apparent to those skilled in the art from the disclosure above.

In the first embodiment described above, the air cleaner 1041 is disposed in the rear of the upper end 1070b of the shock absorber 1070. However, the air cleaner 1041 may be disposed in front of or at the side of the upper end 1070b. The air cleaner 1041 is disposed to adjoin the upper end 1070b of the shock absorber 1070. However, the air cleaner 1041 may be remotely disposed from the upper end 1070b.

In the first embodiment described above, the exhaust chamber 1120 is disposed below the swing arm 1060. However, the exhaust chamber 1120 may not necessarily be disposed below the swing arm 1060.

In the first embodiment described above, the recess 1041a is formed at the front end of the air cleaner 1041. However, the recess 1041a may not necessarily be formed at the front end of the air cleaner 1041. The intake duct 1043 is disposed on the left side of the recess 1041a. However, the intake duct 1043 may be disposed on the right side of the recess 1041a.

In the first embodiment described above, the lower end 1070a of the shock absorber 1070 is directly coupled to the swing arm 1060 with no link mechanism interposed therebetween. However, it may be coupled to the swing arm 1060 via a link mechanism.

In the first embodiment described above, the whole of the air cleaner 1041 is provided above the swing arm 1060. However, only a part of the air cleaner 1041 may be provided above the swing arm 1060. The whole of the exhaust chamber 1120 is provided below the swing arm 1060. However, only a part of the exhaust chamber 1120 may be provided below the swing arm 1060.

Similarly, in the second embodiment, the whole of the air cleaner 2041 is provided above the swing arm 2006. However, only a part of the air cleaner 2041 may be provided above the swing arm 2006. The whole of the exhaust chamber 2024 is provided below the swing arm 2006. However, only a part of the exhaust chamber 2024 may be provided below the swing arm 2006.

In the second embodiment, descriptions are made about a case that the side stand is provided in addition to the main stand. However, the present invention is not limited to this case, but only the main stand may be provided without the side stand.

In the second embodiment, descriptions are made about a case that the vicinity of the central part of the cross pipe in the vehicle width direction protrudes downward. However, the present invention is not limited to this case. Not only does the vicinity of the central part of the cross pipe in the vehicle width direction, but the vicinities of both the ends of the cross pipe in the vehicle width direction may also protrude downward.

In the second embodiment, descriptions are made about a case that the exhaust outlet for discharging exhaust gas is provided in the rear part of the exhaust chamber. However, the present invention is not limited to this case, but an exhaust outlet having functions for purifying exhaust gas discharged from the engine and for reducing exhaust noise may be additionally provided in a rear part of the exhaust chamber having the functions for purifying exhaust gas discharged from the engine and for reducing exhaust noise. In this case, an exhaust outlet having the functions for purifying exhaust gas discharged from the engine and for reducing exhaust noise may be provided to a whole of the exhaust outlet. In a different way, the exhaust outlet having the functions for purifying exhaust gas discharged from the engine and for reducing exhaust noise may be provided in a part in front of the rear wheel.

The first and second embodiments are not limited to individual applications, but may be combined together in an application.

It is a matter of course that the present invention includes various embodiments that are not described herein. Therefore, it is intended that the technical scope of the present invention be defined solely by the appended claims construed appropriately in light of the above descriptions.

Description of Reference Numerals and Symbols
- 1010:: motorcycle
- 1020:: front wheel
- 1030:: vehicle body frame
- 1031:: main frame
- 1032:: down tube
- 1033:: seat rail
- 1034:: pivot part
- 1035:: bracket
- 1036:: stay
- 1037:: center frame
- 1037D:: lower part
- 1037M:: intermediate part
- 1037U:: upper part
- 1038:: head pipe
- 1040:: engine
- 1040a:: cylinder head
- 1041:: air cleaner
- 1041a:: recess
- 1042:: carburetor
- 1043:: intake duct
- 1051:: fuel tank
- 1052:: seat
- 1060:: swing arm
- 1060a:: front part
- 1060b:: rear part
- 1061L,: 1061R: supported part
- 1062L,: 1062R: arm
- 1063:: bridge
- 1064:: bracket
- 1065:: rear fender
- 1070:: cushion unit
- 1070:: shock absorber
- 1070D:: lower part
- 1070U:: upper part
- 1070a:: lower end
- 1070b:: upper end
- 1071:: damper
- 1072:: coil spring
- 1090:: rear wheel
- 1090a:: upper end
- 1091:: axle
- 1100:: exhaust system
- 1110:: exhaust pipe
- 1120:: exhaust chamber
- 1120a:: front end
- 1120b:: protrusion
- 1121:: catalyst
- 1122:: communication section
- 1122a:: opening
- 1123:: mounting part
- 1124:: mounting part
- 1125:: mesh part
- 1131:: first pipe section
- 1132:: second pipe section
- 1133:: folded pipe section
- 1141:: protrusion
- 1141a:: exhaust hole
- 1142:: cap
- 1160:: reflux pipe
- 1170:: connecting pipe
- 1170:: connecting pipe section
- 1190:: silencer
- 1190a:: rear end
- 1191:: protector
- 2001:: motorcycle
- 2002:: head pipe
- 2003:: main frame
- 2003a:: bracket
- 2004,: 2005: pivot supporting plate
- 2004D:: lower part
- 2004M:: intermediate part
- 2004U:: upper part
- 2004a:: pivot part
- 2005:: pivot supporting plate
- 2005a:: pivot part
- 2006:: swing arm
- 2006a:: front part
- 2006b:: rear part
- 2007:: swing arm
- 2008:: rear wheel
- 2008a:: driven sprocket
- 2008a:: upper end
- 2009:: connecting member
- 2010:: mounting member
- 2010,: 2011: mounting member
- 2010a:: plate for one side
- 2010b:: plate for the other side
- 2011:: mounting member
- 2011a:: plate for one side
- 2011b:: plate for the other side
- 2012:: back stay
- 2013, 2014:: handlebar
- 2015:: headlight
- 2016:: front fork
- 2017:: front wheel
- 2018:: seat
- 2019:: fuel tank
- 2020:: engine retaining member
- 2021:: engine
- 2021a:: crankcase
- 2021b:: cylinder block
- 2021c:: cylinder head
- 2022:: drive chain
- 2023:: exhaust pipe
- 2024:: exhaust chamber
- 2024a:: rear end
- 2024b:: exhaust outlet
- 2024c:: end
- 2024d:: lowest part
- 2025:: cover member
- 2025a:: end
- 2026:: main stand
- 2026a:: outermost part
- 2026b:: rotational center
- 2026c:: lowest part
- 2027,: 2028: support leg
- 2027a:: bearing member
- 2027b:: reinforcing member
- 2027c:: side protruding member
- 2027d:: ground contacting plate
- 2027e:: end
- 2028:: support leg
- 2028a:: bearing member
- 2028b:: mounting member
- 2028c:: ground contacting plate
- 2028d:: end
- 2029:: cross pipe
- 2030a:: metal sheet member
- 2031, 2032:: bank sensor
- 2033:: plate member
- 2033a, 2034a:: bracket
- 2035, 2036:: step
- 2037:: side stand
- 2037a:: mounting part
- 2037b:: lowest part
- 2038:: support leg
- 2038a:: mounting member
- 2041:: air cleaner
- 2043:: air intake
- 2050:: screw member
- 2051:: nut
- 2052:: screw member
- 2053:: nut
- 2070:: shock absorber
- 2070U:: upper part
- 2121:: catalyst

## Claims

1. A straddle type vehicle (1010, 2001) comprising:
an engine (1040);
a vehicle body frame (1030) supporting the engine (1040);
a swing arm (1060) pivotally mounted on the vehicle body frame (1030) and extending rearward to support a rear wheel (1090);
a rear fender (1065) supported on the swing arm (1060) so as to cover at least part of the rear wheel (1090);
a shock absorber (1070) positioned between the swing arm (1060) and the vehicle body frame (1030);
an air cleaner (1041) connected to the engine (1040) and being positioned rearward of the shock absorber (1070) and in front of a rearmost portion of the rear fender (1065); and
an expansion chamber (1120) comprising a catalyst (1121) for purifying exhaust gas discharged from the engine (1040), wherein the expansion chamber (1120) is positioned below the shock absorber (1070),
wherein at least a part of the air cleaner (1041) is provided above the swing arm (1060),
at least a part of the expansion chamber (1120) is provided below the swing arm (1060); and
the rear fender (1065) is provided between the air cleaner (1041) and the rear wheel (1090).

2. The straddle type vehicle (1010, 2001) according to claim 1, wherein the vehicle body frame (1030) includes a vertical frame part (1037) extending in a vertical direction rearward of the engine (1040), wherein at least a part of the air cleaner (1041) is provided rearward of the vertical frame part (1037).

3. The straddle type vehicle (1010, 2001) according to claim 1 or 2, wherein the swing arm (1060) has a right arm portion (1062R) and a left arm portion (1062L), and at least a part of the shock absorber (1070) is positioned between the right and left arm portions (1062R, 1062L).

4. The straddle type vehicle (1010, 2001) according to claim 1, 2 or 3, wherein at least a part of the air cleaner (1041) is provided below an upper part of the shock absorber (1070) and below an upper end (1 090a) of the rear wheel (1090).

5. The straddle type vehicle (1010, 2001) according to any preceding claim, wherein at least a part of the expansion chamber (1120) is provided between the vehicle body frame (1030) and the rear wheel (1090) below the swing arm (1060).

6. The straddle type vehicle (1010, 2001) according to any preceding claim,
wherein the air cleaner (1041) is disposed rearward of an upper end of the shock absorber (1070), and/or
wherein the air cleaner (1041) adjoins an upper end of the shock absorber (1070), and/or
wherein a recess (1041a) is formed at a front end of the air cleaner (1041) and is curved along an outer peripheral shape of the shock absorber (1070).

7. The straddle type vehicle (1010, 2001) according to claim 6, further comprising an intake duct (1043) extending from the air cleaner (1041) toward the engine (1040), wherein the intake duct (1043) is disposed on a side of the recess (1041 a).

8. The straddle type vehicle (1010, 2001) according to any preceding claim, wherein a lower end (1070a) of the shock absorber (1070) is directly coupled to the swing arm (1060) with no link mechanism interposed therebetween.

9. The straddle type vehicle (1010, 2001) according to any preceding claim, further comprising a first stand (2026) which is adapted to be reconfigured between a retracted position and a deployed position, wherein said first stand (2026) comprises:
a pair of support legs (2027, 2028) for supporting the vehicle in a standstill state; and
a coupling part (2029) coupling the pair of the support legs (2027, 2028) together,
wherein the expansion chamber (2024) is disposed rearward of the engine (2021), and a rear end (2024a) of the expansion chamber (2024) is disposed in front of the rear wheel (2008), and
the coupling part (2029) of the first stand (2026) is positioned between the rear end (2024a) of the expansion chamber (2024) and the rear wheel (2008) when the first stand (2026) is configured in the retracted position.

10. The straddle type vehicle (1010, 2001) according to claim 9,
wherein the first stand (2026) is constructed such that a whole thereof is positioned above a lowest part (2024d) of the expansion chamber (2024) in a traveling state, and/or
wherein the first stand (2026) is constructed such that both ends of the first stand (2026) in a vehicle width direction are positioned outside in the vehicle width direction of both ends of the expansion chamber (2024) in the vehicle width direction and a lowest part (2026c) of the first stand (2026) is positioned above a lowest part (2024d) of the expansion chamber (2024) in a traveling state, and/or
wherein a vicinity of a central part of the coupling part (2029) in the vehicle width direction protrudes downward in the traveling direction.

11. The straddle type vehicle (1010, 2001) according to claim 9 or 10, further comprising a restraint member adapted to contact the ground when the vehicle is leaned to make a rider conscious of a maximum leaning angle of the vehicle,
wherein vicinities of both ends of the coupling part (2029) of the first stand (2026) in the vehicle width direction incline inward at an inclination angle (α2, α3) equal to or less than the maximum leaning angle (α1) of the vehicle with respect to the vertical direction.

12. The straddle type vehicle (1010, 2001) according to claim 9, 10 or 11,
wherein the coupling part (2029) of the first stand (2026) overlaps with the rear wheel (2008) in a plan view when the first stand (2026) is in the retracted position, and/or
wherein the first stand (2026) has a rotational center above a lowest part (2024d) of the expansion chamber (2024).

13. The straddle type vehicle (1010, 2001) according to any one of claims 9 to 12, further comprising an exhaust outlet (2024b) provided in the rear of the expansion chamber (2024) and between the swing arm (2006) and the first stand (2026) when configured in the retracted position.

14. The straddle type vehicle (1010, 2001) according to any one of claims 9 to 13, further comprising a second stand (2037) adapted to be reconfigured between a retracted position and a deployed position and which includes a support leg (2038) provided on a side of the vehicle for supporting the vehicle in a leaned state,
wherein a lowest part of the second stand (2037) is positioned above a lowest part of the first stand (2026) when both the first and second stands (2026, 2037) are in the retracted position.

15. The straddle type vehicle (1010, 2001) according to any one of claims 9 to 14, further comprising an exhaust outlet (2024b) provided in a rear part of the expansion chamber (2024),
wherein an outermost part of the exhaust outlet (2024b) in the vehicle width direction is positioned inside of an outermost part of the first stand (2026) in the vehicle width direction.

## Patentansprüche

1. Reitsitz-Fahrzeug (1010, 2001), das Folgendes umfasst:
einen Motor (1040),
einen Fahrzeug-Aufbaurahmen (1030), der den Motor (1040) trägt,
eine Schwinge (1060), die schwenkbar an dem Fahrzeug-Aufbaurahmen (1030) angebracht ist und sich nach hinten erstreckt, um ein Hinterrad (1090) zu tragen,
ein hinteres Schutzblech (1065), das an der Schwinge (1060) getragen wird, so dass es wenigstens einen Teil des Hinterrades (1090) abdeckt,
einen Stoßdämpfer (1070), der zwischen der Schwinge (1060) und dem Fahrzeug-Aufbaurahmen (1030) angeordnet ist,
einen Luftfilter (1041), der mit dem Motor (1040) verbunden ist und hinter dem Stoßdämpfer (1070) und vor dem hintersten Abschnitt des hinteren Schutzblechs (1065) angeordnet ist, und
eine Expansionskammer (1120), die einen Katalysator (1121) zum Reinigen von aus dem Motor (1040) ausgestoßenen Abgas umfasst, wobei die Expansionskammer (1120) unterhalb des Stoßdämpfers (1070) angeordnet ist,
wobei wenigstens ein Teil des Luftfilters (1041) oberhalb der Schwinge (1060) bereitgestellt wird,
wenigstens ein Teil der Expansionskammer (1120) unterhalb der Schwinge (1060) bereitgestellt wird und
das hintere Schutzblech (1065) zwischen dem Luftfilter (1041) und dem Hinterrad (1090) bereitgestellt wird.

2. Reitsitz-Fahrzeug (1010, 2001) nach Anspruch 1, wobei der Fahrzeug-Aufbaurahmen (1030) einen vertikalen Rahmenteil (1037) einschließt, der sich in einer vertikalen Richtung von dem Motor (1040) aus nach hinten erstreckt, wobei wenigstens ein Teil des Luftfilters (1041) hinter dem vertikalen Rahmenteil (1037) bereitgestellt wird.

3. Reitsitz-Fahrzeug (1010, 2001) nach Anspruch 1 oder 2, wobei die Schwinge (1060) einen rechten Armabschnitt (1062R) und einen linken Armabschnitt (1062L) hat und wenigstens ein Teil des Stoßdämpfers (1070) zwischen dem rechten und dem linken Armabschnitt (1062R, 1062L) angeordnet ist.

4. Reitsitz-Fahrzeug (1010, 2001) nach Anspruch 1, 2 oder 3, wobei wenigstens ein Teil des Luftfilters (1041) unterhalb eines oberen Teils des Stoßdämpfers (1070) und unterhalb eines oberen Endes (1090a) des Hinterrades (1090) bereitgestellt wird.

5. Reitsitz-Fahrzeug (1010, 2001) nach einem der vorhergehenden Ansprüche, wobei wenigstens ein Teil der Expansionskammer (1120) zwischen dem Fahrzeug-Aufbaurahmen (1030) und dem Hinterrad (1090) unterhalb der Schwinge (1060) bereitgestellt wird.

6. Reitsitz-Fahrzeug (1010, 2001) nach einem der vorhergehenden Ansprüche,
wobei der Luftfilter (1041) hinter einem oberen Ende des Stoßdämpfers (1070) angeordnet ist und/oder
wobei der Luftfilter (1041) an ein oberes Ende des Stoßdämpfers (1070) anstößt und/oder
wobei eine Aussparung (1041a) an einem vorderen Ende des Luftfilters (1041) geformt ist und längs einer Außenumfangsform des Stoßdämpfers (1070) gekrümmt ist.

7. Reitsitz-Fahrzeug (1010, 2001) nach Anspruch 6, das ferner einen Ansaugkanal (1043) umfasst, der sich von dem Luftfilter (1041) zu dem Motor (1040) hin erstreckt, wobei der Ansaugkanal (1043) auf einer Seite der Aussparung (1041a) angeordnet ist.

8. Reitsitz-Fahrzeug (1010, 2001) nach einem der vorhergehenden Ansprüche, wobei ein unteres Ende (1070a) des Stoßdämpfers (1070) unmittelbar an die Schwinge (1060) gekoppelt ist, ohne dass ein Verknüpfungsmechanismus zwischen dieselben geschaltet ist.

9. Reitsitz-Fahrzeug (1010, 2001) nach einem der vorhergehenden Ansprüche, das ferner einen ersten Ständer (2026) umfasst, der dafür eingerichtet ist, zwischen einer eingezogenen Stellung und einer entfalteten Stellung neu konfiguriert zu werden, wobei der erste Ständer (2026) Folgendes umfasst:
ein Paar von Stützbeinen (2027, 2028) zum Stützen des Fahrzeugs in einem Zustand des Stillstandes und
einen Kopplungsteil (2029), der das Paar der Stützbeine (2027, 2028) zusammenkoppelt,
wobei die Expansionskammer (2024) hinter dem Motor (2021) angeordnet ist und ein hinteres Ende (2024a) der Expansionskammer (2024) vor dem Hinterrad (2008) angeordnet ist und
der Kopplungsteil (2029) des ersten Ständers (2026) zwischen dem hinteren Ende (2024a) der Expansionskammer (2024) und dem Hinterrad (2008) angeordnet ist, wenn der erste Ständer (2026) in der eingezogenen Stellung konfiguriert ist.

10. Reitsitz-Fahrzeug (1010, 2001) nach Anspruch 9,
wobei der erste Ständer (2026) derart aufgebaut ist, dass in einem Fahrtzustand eine Gesamtheit desselben oberhalb eines untersten Teils (2024d) der Expansionskammer (2024) angeordnet ist, und/oder
wobei der erste Ständer (2026) derart aufgebaut ist, dass in einem Fahrtzustand die beiden Enden des ersten Ständers (2026) in der Fahrzeug-Breitenrichtung außerhalb in der Fahrzeug-Breitenrichtung der beiden Enden der Expansionskammer (2024) in der Fahrzeug-Breitenrichtung angeordnet sind und in einem Fahrtzustand ein unterster Teil (2026c) des ersten Ständers (2026) oberhalb eines untersten Teils (2024d) der Expansionskammer (2024), angeordnet ist und/oder
wobei eine Nachbarschaft eines Mittelteils des Kopplungsteils (2029) in der Fahrzeug-Breitenrichtung in der Fahrtrichtung nach unten vorspringt.

11. Reitsitz-Fahrzeug (1010, 2001) nach Anspruch 9 oder 10, das ferner ein Rückhalteelement umfasst, das dafür eingerichtet ist, den Boden zu berühren, wenn das Fahrzeug geneigt wird, um einen Fahrer auf einen maximalen Neigungswinkel des Fahrzeugs aufmerksam zu machen,
wobei sich Nachbarschaften der beiden Enden des Kopplungsteils (2029) des ersten Ständers (2026) in der Fahrzeug-Breitenrichtung in einem Neigungswinkel (α2, α3) nach innen neigen, der gleich dem maximalen Neigungswinkel (α1) des Fahrzeugs in Bezug auf die vertikale Richtung oder geringer als derselbe ist.

12. Reitsitz-Fahrzeug (1010, 2001) nach Anspruch 9, 10 oder 11,
wobei sich der Kopplungsteil (2029) des ersten Ständers (2026) in einer Draufsicht mit dem Hinterrad (2008) überlappt, wenn sich der erste Ständer (2026) in der eingezogenen Stellung befindet, und/oder
wobei der erste Ständer (2026) einen Drehungsmittelpunkt oberhalb eines untersten Teils (2024d) der Expansionskammer (2024) hat.

13. Reitsitz-Fahrzeug (1010, 2001) nach einem der Ansprüche 9 bis 12, das ferner einen Abgasauslass (2024b) umfasst, der im hinteren Teil der Expansionskammer (2024) und zwischen der Schwinge (2007) und dem ersten Ständer (2026), wenn er in der eingezogenen Stellung konfiguriert ist, bereitgestellt wird.

14. Reitsitz-Fahrzeug (1010, 2001) nach einem der Ansprüche 9 bis 13, das ferner einen zweiten Ständer (2037) umfasst, der dafür eingerichtet ist, zwischen einer eingezogenen Stellung und einer entfalteten Stellung neu konfiguriert zu werden, und der ein Stützbein (2038) einschließt, das auf einer Seite des Fahrzeugs bereitgestellt wird, um das Fahrzeug in einem geneigten Zustand zu stützen,
wobei ein unterster Teil des zweiten Ständers (2037) oberhalb eines untersten Teils des ersten Ständers (2026) angeordnet ist, wenn sich sowohl der erste als auch der zweite Ständer (2026, 2037) in der eingezogenen Stellung befinden.

15. Reitsitz-Fahrzeug (1010, 2001) nach einem der Ansprüche 9 bis 14, das ferner einen Abgasauslass (2024b) umfasst, der in einem hinteren Teil der Expansionskammer (2024) bereitgestellt wird,
wobei ein äußerster Teil des Abgasauslasses (2024b) in der Fahrzeug-Breitenrichtung innerhalb eines äußersten Teils des ersten Ständers (2026) in der Fahrzeug-Breitenrichtung angeordnet ist.

## Revendications

1. Véhicule du type à enfourcher (1010,2001), comprenant :
un moteur (1040) ;
une ossature de la carrosserie du véhicule (1030) supportant le moteur (1040) ;
un bras oscillant (1060), monté de manière pivotante sur l'ossature de la carrosserie du véhicule (1030) et s'étendant vers l'arrière pour supporter une roue arrière (1090) ;
une aile arrière (1065) supportée sur le bras oscillant (1060), de sorte à recouvrir au moins une partie de la roue arrière (1090) ;
un amortisseur de chocs (1070), positionné entre le bras oscillant (1060) et l'ossature de la carrosserie du véhicule (1030) ;
un filtre à air (1041), connecté au moteur (1040) et positionné vers l'arrière dé l'amortisseur de chocs (1070) et devant la partie arrière extrême du garde-boue arrière (1065) ; et
une chambre d'expansion (1120), comprenant un catalyseur (1121) pour purifier les gaz d'échappement déchargés du moteur (1040), la chambre d'expansion (1120) étant positionnée au-dessous de l'amortisseur de chocs (1070) ;
dans lequel au moins une partie du filtre à air (10421) est fournie au-dessus du bras oscillant (1060) ;
au moins une partie de la chambre d'expansion (1120) est fournie au-dessous du bras oscillant (1060) ; et
le garde-boue arrière (1065) est fourni entre le filtre à air (1041) et la roue arrière (1090).

2. Véhicule du type à enfourcher (1010, 2001) selon la revendication 1, dans lequel l'ossature de la carrosserie du véhicule (1030) englobe une partie d'ossature verticale (1037), s'étendant dans une direction verticale, vers l'arrière du moteur (1040), au moins une partie du filtre à air (1041) étant agencée vers l'arrière de la partie d'ossature verticale (1037).

3. Véhicule du type à enfourcher (1010, 2001) selon les revendications 1 ou 2, dans lequel le bras oscillant (1060) comporte une partie de bras de droite (1062R) et une partie de bras de gauche (1062L), au moins une partie de l'amortisseur de chocs (1070) étant positionnée entre les parties de bras de droite et de gauche (1062R, 1062L).

4. Véhicule du type à enfourcher (1010, 2001) selon les revendications 1, 2 ou 3, dans lequel au moins une partie du filtre à air (1041) est agencée au-dessous d'une partie supérieure de l'amortisseur de chocs (1070) et au-dessous d'une extrémité supérieure (1090a) de la roue arrière (1090).

5. Véhicule du type à enfourcher (1010, 2001) selon l'une quelconque des revendications précédentes, dans lequel au moins une partie de la chambre d'expansion (1120) est agencée entre l'ossature de la carrosserie du véhicule (1030) et le roue arrière (1090), au-dessous du bras oscillant (1060).

6. Véhicule du type à enfourcher (1010, 2001) selon l'une quelconque des revendications précédentes,
dans lequel le filtre à air (1041) est agencé vers l'arrière d'une extrémité supérieure de l'amortisseur de chocs (1070), et/ou
dans lequel le filtre à air (1041) est adjacent à une extrémité supérieure de l'amortisseur de chocs (1070), et/ou
dans lequel un évidement (1041a) est formé au niveau d'une extrémité avant du filtre à air (1041) et est courbé le long d'une forme périphérique externe de l'amortisseur de chocs (1070).

7. Véhicule du type à enfourcher (1010, 2001) selon la revendication 6, comprenant en outre une conduite d'admission (1043), s'étendant du filtre à air (1041) vers le moteur (1040), la conduite d'admission (1043) étant agencée sur un côté de l'évidement (1041a).

8. Véhicule du type à enfourcher (1010, 2001) selon l'une quelconque des revendications précédentes, dans lequel une extrémité inférieure (1070a) de l'amortisseur de chocs (1070) est accouplée directement au bras oscillant (1060), aucun mécanisme de liaison n'étant agencé entre eux.

9. Véhicule du type à enfourcher (1010, 2001) selon l'une quelconque des revendications précédentes, comprenant en outre une première béquille (2026), adaptée pour être reconfigurée entre une position rétractée et une position déployée, ladite première béquille (2026) comprenant :
une paire de pieds de support (2027, 2028) pour supporter le véhicule dans un état d'arrêt ; et
une partie d'accouplement (2029) accouplant la paire de pieds de support (2027, 2028) ;
la chambre d'expansion (2024) étant agencée vers l'arrière du moteur (2021), et une extrémité arrière (2024a) de la chambre d'expansion (2024) étant agencée devant la roue arrière (2008) ; et
la partie d'accouplement (2029) de la première béquille (2026) étant positionnée entre l'extrémité arrière (2024a) de la chambre d'expansion (2024) et la roue arrière (2008) lorsque la première béquille (2026) occupe la position rétractée.

10. Véhicule du type à enfourcher (1010, 2001) selon la revendication 9,
dans lequel la première béquille (2026) est construite de sorte qu'elle est dans son ensemble positionnée au-dessus de la partie inférieure extrême (2024d) de la chambre d'expansion (2024) dans un état de roulement ; et/ou
dans lequel la première béquille (2026) est construite de sorte que les deux extrémités de la première béquille (2026), dans une direction de la largeur du véhicule, sont positionnées à l'extérieur, dans la direction de la largeur du véhicule, des deux extrémités de la chambre d'expansion (2024), dans la direction de la largeur du véhicule, la partie inférieure extrême (2026c) de la première béquille (2026) étant positionnée au-dessous de la partie inférieure extrême (2024d) de la chambre d'expansion (2024), dans un état de roulement ; et/ou
dans lequel un voisinage d'une partie centrale de la partie d'accouplement (2029), dans la direction de la largeur du véhicule, déborde vers le bas dans la direction du roulement.

11. Véhicule du type à enfourcher (1010, 2001) selon les revendications 9 ou 10, comprenant en outre un élément de retenue, adapté pour contacter le sol lorsque le véhicule se trouve dans une position d'appui, pour rendre un conducteur conscient d'un angle d'inclinaison maximal du véhicule ;
les voisinages des deux extrémités de la partie d'accouplement (2029) de la première béquille (2026), dans la direction de la largeur du véhicule, étant inclinés vers l'intérieur à un angle d'inclinaison (α2, α3), égal ou inférieur à l'angle d'inclinaison maximal (α1) du véhicule par rapport à la direction verticale.

12. Véhicule du type à enfourcher (1010, 2001) selon les revendications 9, 10 ou 11,
dans lequel la partie d'accouplement (2029) de la première béquille (2026) chevauche la roue arrière (2008) dans une vue en plan lorsque la première béquille (2026) se trouve dans la position rétractée ; et/ou
dans lequel la première béquille (2026) comporte un centre de rotation au-dessus de la partie inférieure extrême (2024d) de la chambre d'expansion (2024).

13. Véhicule du type à enfourcher (1010, 2001) selon l'une quelconque des revendications 9 à 12, comprenant en outre une sortie d'échappement (2024b), agencée dans l'arrière de la chambre d'expansion (2024) et entre le bras oscillant (2006) et la première béquille (2026) lorsqu'elle se trouve dans la position rétractée.

14. Véhicule du type à enfourcher (1010, 2001) selon l'une quelconque des revendications 9 à 13, comprenant en outre une deuxième béquille (2037), adaptée pour être reconfigurée entre une position rétractée et une position déployée, et englobant un pied de support (2038) agencé sur un côté du véhicule pour supporter le véhicule dans une position d'appui ;
la partie inférieure extrême de la deuxième béquille (2037) étant positionnée au-dessus de la partie inférieure extrême de la première béquille (2026) lorsque les première et deuxième béquilles (2026, 2037) se trouvent dans la position rétractée.

15. Véhicule du type à enfourcher (1010, 2001) selon l'une quelconque des revendications 9 à 14, comprenant en outre une sortie d'échappement (2024b) agencée dans une partie arrière de la chambre d'expansion (2024) ;
la partie externe extrême de la sortie d'échappement (2024b), dans la direction de la largeur du véhicule, étant positionnée à l'intérieur de la partie externe extrême de la première béquille (2026), dans la direction de la largeur du véhicule.
